Europäisches Patentamt

European Patent Office

Office européen des brevets

(19)

(11) Veröffentlichungsnummer: **0 003 780**
**B1**

(12) **EUROPÄISCHE PATENTSCHRIFT**

(21) Anmeldenummer: **79100383.3**

(22) Anmeldetag: **09.02.79**

(51) Int. Cl.³: **B 23 K 9/28**

(54) Schutzgasschweissbrenner zum Lichtbogenschweissen mit abschmelzender Elektrode

(30) Priorität: **23.02.78 DE 2807684**

(43) Veröffentlichungstag der Anmeldung:
**05.09.79 Patentblatt 79/18**

(45) Bekanntmachung des Hinweises auf die Patenterteilung:
**20.08.80 Patentblatt 80/17**

(84) Benannte Vertragsstaaten:
**BE CH FR GB IT NL SE**

(56) Entgegenhaltungen:
**DE - B - 1 065 955**
**FR - A - 1 351 788**
**FR - A - 2 107 427**
**GB - A - 747 075**
**GB - A - 1 152 904**

(73) Patentinhaber: **Messer Griesheim GMBH
Patentabteilung Hanauer Landstrasse 330
D - 6000 Frankfurt/Main (DE)**

(72) Erfinder: **Brunnquell, Werner
Frankfurter Ring 26
D - 8000 München 40 (DE)
Buchbauer, Christian
Dorfstrasse 31
D - 8059 Moosinning (DE)
Jackwerth, Franz
Josef-Seliger-Strasse 50
D - 8060 Dachau (DE)**

Courier Press, Leamington Spa, England.

### Schutzgasschweißbrenner zum Lichtbogenschweißen mit abschmelzender Elektrode

Die vorliegende Erfindung betrifft einen Schutzgasschweißbrenner zum Lichtbogenschweißen mit abschmelzender Elektrode mit zwei konzentrischen, schweißstromführenden Rohren, von denen das Innerste zur Gaszufuhr und Elektrodenrahtführung dient und mit dem darüberliegenden äußeren Rohr einen Zwangskreislauf für das Kühlwasser bildet, und wobei beide Rohre in einem Aufnahmestück für eine Stromkontaktdüse enden. Der Schutzgasschweißbrenner weist ferner ein gegenüber den beiden Rohren elektrisch isoliertes Manteirohr auf, an dessen der Stromkontaktdüse zugeordnetem Ende ein Gasdüsenträger mit einer Schutzgasdüse befestigt ist, wobei sich zwischen Gasdüsentrager und den beiden stromführenden Röhren eine elektrische Isolierung befindet.

Mit dieser Ausbildung wird auf einen Stand der Technik bei Schutzgasschweißbrennern Bezug genommen, wie er beispielsweise aus der Zeitschrift "Werkstatt u. Betrieb" 109 (1976) 12, Seite 709 bis 714, "Temperaturmessungen zur optimalen Gestaltung von Schweißbrennern" bekannt geworden ist. Bei diesen bekannten Brennern ist die Isolierung zwischen Gasdüsenträger und den beiden stromführenden Rohren als Keramikhülse ausgebildet. Diese Keramikhülse hat wohl den Vorteil einer guten elektrischen Isolierung bei gleichzeitig guter Wärmeleitung, hat aber den Nachteil, daß sie insbesondere gegen mechanische Belastungen anfällig ist. Hinzu kommt, daß die in jeder Keramikhülse vorhandenen Poren einer optimalen Wärmeleitung entgegenstehen und darüber hinaus aufgrund der nicht möglichen mechanischen Beanspruchung der Keramikhülse stets ein Luftspalt zwischen Keramikhülse und Gasdüsenträger bzw. Keramikhülse und stromführenden Rohren vorhanden ist, der wiederum einem optimalen Wärmeübergang negativ gegenübersteht.

Ausgehend von diesem Stand der Technik ist es Aufgabe der vorliegenden Erfindung, einen Schweißbrenner der eingangs genannten Art dahingehend zu verbessern, daß die während des Schweissens durch Wärmestrahlung der Schutzgasdüse zugeführte Wärmemenge, die eine Erhitzung der Düse und damit eine Verringerung der Standzeit der Düse bewirkt, in kürzest möglicher Zeit über die genannte Isolierung hinweg den kühlwasserdurchflossenen Rohren zu- und abgeführt werden kann.

Zur Lösung dieser Aufgabe wird gemäß der vorliegenden Erfindung vorgeschlagen, daß die Isolierung eine Isolierhülse aus gut wärmeleitendem, Metall mit einer gut wärmeleitenden, hochhitzebeständigen Polyimidfolienbeschichtung aufweist und kraftschlüssig an Gasdüsenträger und äsßeres stromführendes und wassergekühltes Rohr gepreßt ist.

Durch die Erfindung wird vorteilhaft eine Isolierung geschaffen, die eine gegenüber den bisher bekannt gewordenen Schweißbrennern bessere Ableitung der der Schutzgasdüse zugeführten Wärmemenge ermöglicht. So haben beispielsweise Vergleichsmessungen ergeben, daß bei einem Schweißbrenner nach dem Stand der Technik mit Keramikeinsatz die Temperatur der Schutzgasdüse am Meßpunkt G 28 (s. Bild 7, auf Seite 712 des o.g. Artikels) bei einem Schweißstrom von 300 A 160°C beträgt. Im Gegensatz dazu wurde bei gleichen Meßbedingungen mit einem Brenner, welcher die erfindungsgemäß ausgebildete Isolierung aufweist, eine Temperatur von 85°C gemessen. Diese Werte zeigen, daß durch die Verwendung der erfindungsgemäß vorgeschlagenen Isolation die Temperatur der Schutzgasdüse einen gegenüber den bisherig bekannt gewordenen Brennern erheblich kleineren Wert aufweist.

Dies bewirkt wiederum eine höhere Standzeit der Schutzgasdüse sowie der mit der Schutzgasdüse direkt oder indirekt in Verbindung stehenden Bauteile des Brenners, so daß dessen Lebensdauer ebenfalls verbessert ist.

Die o.g. Vorteile sind insbesondere darauf zurückzuführen, daß durch die Ausbildung der Isolierung aus einem gut wärmeleitenden Metall und einer gut wärmeleitenden aber elektrisch isolierenden Polyimidfolie es möglich wird, die so gewonnene Isolierung kraftschlüssig an Gasdüsenträger und äußeres stromführendes, wassergekühltes Rohr anzupressen. Dies kann durch verschiedene Arbeitstechniken erfolgen. Bevorzugt wird vorgeschlagen, daß durch Bearbeitungsvorgänge wie Drücken, Rollen, Ziehen oder dgl. diese kraftschlüssige Verbindung erreicht wird. Durch den Kraftschluß wird erreicht, daß der Luftspalt zwischen den einzelnen Bauelementen, welcher einer guten Wärmeableitung entgegensteht, auf ein Minimum begrenzt ist und damit praktisch nicht als Hindernis bei der Wärmeableitung der Wärmemenge der Schutzgasdüse zu dem Kühlwasser angesehen werden kann.

Gemäß einem weiteren Vorschlag der Erfindung ist die Polyimidfolie nur auf der Außenseite der Metallhülse vorgesehen. Dies ist im Hinblick auf die Fertigung und Montage des Brenners von besonderem Vorteil. Dabei wird bevorzugt die Folie aufgeklebt, so daß einerseits beim Zusammenpressen keine Relativbewegung zwischen Hülse und Folie stattfinden kann, und zum anderen ein möglichst enges Anliegen an der Hülse gegeben ist. Dies ist von besonderer Wichtigkeit im Hinblick darauf, daß die Folie bevorzugt im Dickenbereich von 5 bis 200 $\mu$m liegt. Besonders vorteilhaft hat sich eine Folienstärke von 50 $\mu$m herausgestellt.

Weitere vorteilhafte Merkmale ergeben sich aus der nachfolgenden Beschreibung eines Ausführungsbeispieles sowie den Unteransprüchen. In den Zeichnungen veranschaulicht

Fig. 1 einen Schutzgasschweißbrenner in schematischer Darstellung;

Fig. 2 die Einzelheit A in Fig. 1 in vergrößerter Halbschnitt-Darstellung.

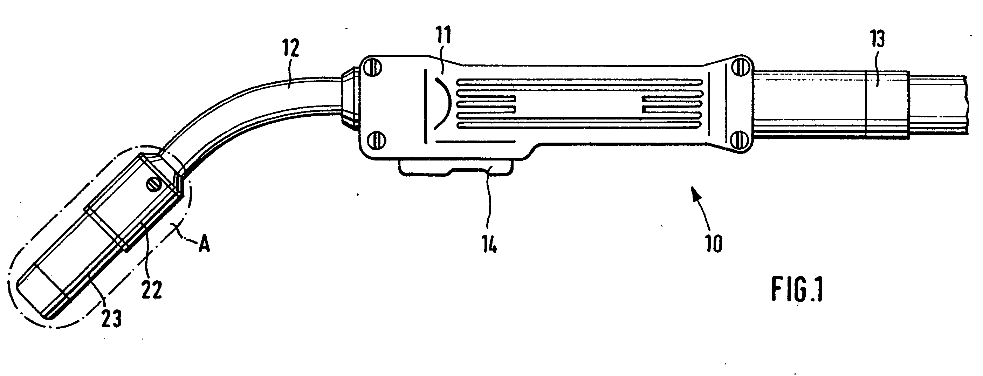

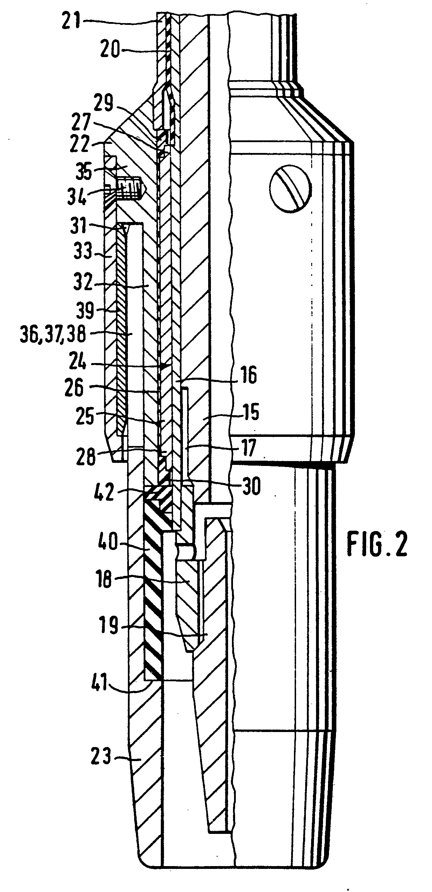

In Fig. 1 ist der Schutzgasschweißbrenner zum Lichtbogenschweißen mit abschmelzender Elektrode in seiner Gesamtheit mit 10 bezeichnet. Der Schweißbrenner 10 weist einen aus zwei Halbschalen gebildeten Griff 11 auf, an dessen einem Ende ein Rüssel 12 und an dessen anderem Ende ein Schlauchpaket 13 befestigt ist. Ferner ist im Griff 11 ein Bedienungsschalter 14 eingesetzt. Im Rüssel 12 sind, wie auch Fig. 2 zeigt, zwei konzentrische stromführende Rohre 15, 16 vorgesehen. Das innere Rohr 15 dient zur Gaszufuhr und Elektrodendrahtführung und bildet mit dem darüberliegenden äußeren Rohr 16 einen Zwangskreislauf 17 für das Kühlwasser. Aus Übersichtsgründen ist dabei im Zwangskreislauf 17 für das Kühlwasser nur die Umlenkstelle in Fig. 2 veranschaulicht, die als Ringkanal ausgebildet ist. In diesem Ringkanal münden einerseits die Kühlmittelzufuhrleitungen und andererseits sind daran die Kühlmittelabführleitungen in an sich bekannter Weise angeschlossen. Die Zuführ- und Abführkanäle werden dabei in einfachster Weise durch entsprechende Ausnehmungen im inneren Rohr, die durch das äußere Rohr 16 abgedeckt werden, gebildet.

Beide Rohre 15, 16 enden in einem Aufnahmestück 18 für eine Stromkontaktdüse 19. Dabei ist bevorzugt das Aufnahmestück mit den Rohren 15 und 16 durch Löten verbunden und derart den beiden Rohrenden zugeordnet, daß die Stirnseite des Aufnahmestückes gleichzeitig die Begrenzung für den Wasserumlaufringkanal 17 bildet. Dadurch wird eine intensive Kühlung des Aufnahmestückes 18 und damit eine schnelle Wärmeableitung von der Stromkontaktdüse 19 erreicht.

Die beiden Rohre 15 und 16 werden von einem gegenüber diesen beiden Rohren 15 und 16 durch die Isolierung 20 elektrisch isolierten Mantelrohr 21 umgeben. An dem der Stromkontaktdüse 19 zugeordneten Ende des Mantelrohres 21 ist ein Gasdüsenträger 22 mit einer Schutzgasdüse 23 befestigt. Zwischen Gasdüsenträger 22 und den beiden stromführenden Rohren 15 und 16 ist eine elektrische Isolierung 24 angeordnet. Die Isolierung 24 weist eine Isolierhülse 25 aus gut wärmeleitendem Metall, vorzugsweise Kupfer mit einer Polyimidfolienbeschichtung 26 auf. Die Isolierung 24 ist kraftschlüssig an Gasdüsenträger 22 und äußeres wassergekühltes stromführendes Rohr 16 gepreßt. Wie weiter oben ausgeführt, wird dadurch eine optimale Isolation und Wärmeableitung erreicht. Die Polyimidfolie 26 ist vorzugsweise nur auf der Außenseite der Hülse 25 vorgesehen, was im Hinblick auf eine einfache Fertigung des Schutzgasbrenners besonders günstig ist.

Wie aus Fig. 2 ferner zu ersehen ist, ist jeder Stirnseite 27, 28 der Isolierhülse 25 ein elastischer, elektrisch isolierender Ring 29, 30 zugeordnet. Durch diese Ringe wird eine kriechstreckenfreie Isolation der Stirnseiten der Isolierhülse 25 erreicht.

Wie weiterhin Fig. 2 veranschaulicht, weist der Gasdüsenträger 22 einen Ringschlitz 31 zur Gasdüsenaufnahme auf. Der Ringschlitz 31 wird dabei durch eine mit dem Mantelrohr 21 mechanisch festverbundene Bundhülse 32 gebildet, die von einer Ringhülse 33 umfaßt ist, und mittels Schrauben 34 oder dgl. am Bund 32 befestigt ist. Die Gasdüse 23 weist im Haltebereich 36 Längsschlitz 37 auf. Die Gasdüse 23 wird über eine im Gasdüsenträger 22 gehaltene und die Gasdüse 23 im Längsschlitzbereich 38 umfassende Kontaktlamelle 39 gegen die Bundhülse 32 des Gasdüsenträgers 22 angepresst. Durch die Kontaktlamelle 39 wird vorteilhaft die Gasdüse gegen den Gasdüsenträger gepreßt, so daß auch hier eine nahezu luftspaltfreie und eine gute Wärmeableitung wirkende kraftschlüssige Verbindung erreicht wird. Diese Kontaktlamelle trägt damit vorteilhaft dazu bei, daß die in der Schutzgasdüse sich speichernde Wärmemenge in schnellstmöglicher Weise den gekühlten Brennerinnenrohren 15, 16 zugeführt und über das Kühlmittel abgeführt werden kann.

In der Schutzgasdüse 23 ist ferner noch eine Isolierhülse 40 angeordnet, die sich auf dem Bund 41 der Schutzgasdüse 23 abstützt. Dem anderen Ende der Isolierhülse 40 ist ein Isolierring 42 kraftschlüssig dem gekühlten Außenrohr 16 zugeordnet. Durch diese Ausbildung wird erreicht, daß beim Einschieben der Schutzgasdüse in den Gasdüsenträger keine Strombrücke durch Spritzer gebildet wird.

**Patentansprüche**

1. Schutzgasschweißbrenner (10) zum Lichtbogenschweißen mit abschmelzender Elektrode mit zwei konzentrischen, schweißstromführenden Rohren (15, 16) von denen das Innerste (15) zur Gaszufuhr und Elektrodendrahtführung dient und mit dem darüberliegenden äußeren Rohr (16) einen Zwangskreislauf für das Kühlwasser bildet, und wobei beide Rohre (15, 16) in einem Aufnahmestück (18) für eine Stromkontaktdüse (19) enden und mit einem gegenüber den beiden Rohren elektrisch isolierten Mantelrohr (21), an dessen der Stromkontaktdüse (19) zugeordnetem Ende ein Gasdüsenträger (22) mit einer Schutzgasdüse (23) befestigt ist, wobei sich zwischen Gasdüsenträger (22) und den beiden stromführenden Rohren (15, 16) eine elektrische Isolierung (24) befindet,
dadurch gekennzeichnet, daß die Isolierung (24) eine Isolierhülle (25) aus gut wärmeleitendem Metall mit einer gut wärmeleitenden, hoch hitzebeständigen Polyimid-.

folienbeschichtung (26) aufweist und kraftschlüssig an Gasdüsenträger (22) und äußeres stromführendes, wassergekühltes Rohr (16) gepreßt ist.

2. Schutzgasbrenner nach Anspruch 1, dadurch gekennzeichnet, daß die Polyimidfolienbeschichtung (26) nur auf der Außenseite der Hülse (25) vorgesehen ist.

3. Schutzgasbrenner nach Anspruch 1 oder 2, dadurch gekennzeichnet, daß die Polyimidfolienbeschichtung (26) eine Dicke im Bereich von 5 bis 200 μm, vorzugsweise von 50 μm, aufweist.

4. Schutzgasbrenner nach einem der Ansprüche 1 bis 3, dadurch gekennzeichnet, daß jeder Stirnseite (27, 28) der Isolationshülse (25) ein elastischer, elektrisch isolierender Ring (29, 30) zugeordnet ist.

5. Schutzgasbrenner nach einem der Ansprüche 1 bis 4, dadurch gekennzeichnet, daß der Gasdüsenträger (22) einen Ringschlitz (31) zur Gasdüsenaufnahme aufweist, und daß ferner die Gasdüse (23) im Haltebereich (36) längsgeschlitzt ist sowie über eine im Gasdüsenträger (22) gehaltene, die Gasdüse (23) im Schlitzbereich (38) umfassende Multikontaktfeder (39) gegen den Gasdüsenträger (22) anpreßbar ist.

## Revendications

1. Chalumeau der soudure à gaz de protection (10) pour la soudure à l'arc avec und électrode fondante, chalumeau comportant deux tubes concentriques (15, 16) conduisant le courant de soudure, le plus interne (15) de ces tubes servant à l'alimentation en gaz et au guidage du fil d'électrode et constituant avec le tube le plus externe (16) le recouvrant un l'eau de refroidissement, ces deux tubes (15, 16) se terminant dans une pièce (18) réceptrice pour une buse de contact de courant (19), tandis qu'il est prévu, électriquement isolé par rapport aux deux tubes (15, 16), un tube enveloppe (21) sur l'extrémité, associée à la buse de contact de courant (19), duquel est fixé un support de buse à gaz (22) avec une buse de gaz de protection (23), une isolation électrique (24) se trouvant entre le support de buse à gaz (22) et les deux tubes (15, 16) conduisant le courant, chalumeau caractérisé en ce que l'isolation (24) comporte une gaine (25) en métal bon conducteur de la chaleur, avec un revêtement (26) en film de polyimide très résistant à la chaleur, bon conducteur de la chaleur, et qui est pressé à force contre le support de buse à gaz (22) et le tube le plus externe (16) conduisant le courant et refroidi par l'eau.

2. Chalumeau selon la revendication 1, caractérisé en ce que le revêtement en film de polyimide (26) est prévu uniquement sur la face extérieure de la gaine (25).

3. Chalumeau selon l'une quelconque des revendications 1 et 2, caractérisé en ce que le revêtement en film de polyimide (26) présente une épaisseur de l'ordre de 5 à 200 μm, de préférence de 50 μm.

4. Chalumeau selon l'une quelconque des revendications 1 à 3, caractérisé en ce que, à chacune des faces frontales (27, 28) de la douille d'isolation (25), est associé un anneau élastique (29, 30) électriquement isolant.

5. Chalumeau selon l'une quelconque des revendications 1 à 4, caractérisé en ce que le support de buse à gaz (22) comporte une fente annulaire (31) pour recevoir la buse à gaz, tandis qu'en outre la buse à gaz (23) est fendue longitudinalement dans la zone de maintien (36) et qu'elle est susceptible d'être pressée contre le support de buse à gaz (22) par l'intermédiaire d'un ressort à contacts multiples (39) maintenu dans le support de buse à gaz (22) et entourant la buse à gaz (23) dans la zone (38) de la fente.

## Claims

1. Inert-gas torch (10) for arc welding with a consumable electrode with two concentric, welding current carrying tubes (15, 10), the most central one (15) of which serves for gas supply and electrode feeding and forms a forced circuit for the cooling water with the external tube (16) lying around it, both tubes (15, 16) ending in a receiving part (18) for a current contact nozzle (19), and with a tubular shell (21) which is electrically insulated against both tubes and has a gas nozzle support (22) with an inert-gas nozzle (23) attached to that end which is assigned to the current contact nozzle (19) whereby an electrical insulation (24) is located between the gas nozzle support (22) and the two current-carrying tubes (15, 16), being characterized by the fact that the insulation (24) has an insulating coating (25) out of well heat-conducting metal with a well heat-conducting, highly heat-resistant polyimid foil coating (26) and is coupled by pressing it to gas nozzle support (22) and external, current-carrying, water-cooled tube (16).

2. Inert-gas torch as of claim 1, being characterized by the fact that polyimid foil coating (26) is only being provided for on the outside of the coating (25).

3. Inert-gas torch as of claim 1 or 2, being characterized by the polyimid foil coating (26) having a thickness within the limits of 5 and 200 μm by preference.

4. Inert-gas torch as of claims 1 to 3, being characterized by the fact that a flexible, electrically insulating ring (29, 30) is assigned to each front side (27, 28) of the insulation socket (25).

5. Inert-gas torch as of claims 1 to 4, being characterized by the fact that the gas nozzle support 22 has a circular slot (31) for receiving the gas nozzle and that, in addition, gas nozzle (23) is slit longitudinally in the retension range (36) and can be pressed against the gas nozzle support (22) by means of a multi-contact spring (39) which is held in the gas nozzle support (22) and embraces the gas nozzle (23) in the slotted range.

FIG.1

0 003 780

FIG.2